# EUROPÄISCHE PATENTSCHRIFT

(11) **EP 1 521 904 B1**
(45) Veröffentlichungstag und Bekanntmachung des Hinweises auf die Patenterteilung: **09.09.2009**
(21) Anmeldenummer: 03763707.1
(22) Anmeldetag: 04.07.2003
(51) Int. Cl.: F01P 5/12, F16D 47/06, F16D 35/02, F04D 13/02

(54) **VORRICHTUNG ZUM ANTRIEB EINER KÜHLMITTELPUMPE**
DEVICE FOR DRIVING A COOLANT PUMP
DISPOSITIF POUR L'ENTRAINEMENT D'UNE POMPE A AGENT DE REFROIDISSEMENT

(30) Priorität: 12.07.2002 DE 10232138
(43) Veröffentlichungstag der Anmeldung: 13.04.2005
(73) Patentinhaber: Behr GmbH & Co. KG, 70469 Stuttgart (DE)
(72) Erfinder: SCHULTHEISS, Gerold, 75173 Pforzheim (DE); AMBROS, Peter, 72127 Kusterdingen (DE); MÜLLER, Rolf, 71642 Ludwigsburg (DE); STOKLOSSA, Rudolf, 75417 Mühlacker (DE)
(74) Vertreter: Heumann, Christian
(86) Internationale Anmeldenummer: PCT/EP2003/007165
(87) Internationale Veröffentlichungsnummer: WO 2004/007923

(56) Entgegenhaltungen:
- US-A- 3 924 716
- PATENT ABSTRACTS OF JAPAN Bd. 0103, Nr. 07 (M-527), 18. Oktober 1986 (1986-10-18) & JP 61 119825 A (AISIN SEIKI CO LTD), 7. Juni 1986 (1986-06-07)
- PATENT ABSTRACTS OF JAPAN Bd. 0120, Nr. 64 (M-672), 26. Februar 1988 (1988-02-26) & JP 62 210287 A (AISIN SEIKI CO LTD), 16. September 1987 (1987-09-16)

## Beschreibung

Die Erfindung betrifft eine Vorrichtung zum Antrieb einer Kühlmittelpumpe für den Kühlmittelkreislauf eines Verbrennungsmotors für ein Kraftfahrzeug nach dem Oberbegriff des Patentanspruchs 1, bekannt durch die DE-A 199 32 359 der Anmelderin. Darüber hinaus betrifft die Erfindung ein Verfahren zur Steuerung der Drehzahl einer Kühlmittelpumpe für den Kühlmittelkreislauf eines Verbrennungsmotors eines Kraftfahrzeuges nach dem Oberbegriff des Patentanspruches 9.

Durch die DE-A 199 32 359 der Anmelderin wurde ein Antrieb für eine Kühlmittelpumpe mittels Flüssigkeitsreibungskupplung bekannt, die in eine Riemenscheibe eines Riementriebes für den Antrieb der Kühlmittelpumpe integriert ist. Durch diese elektromagnetisch ansteuerbare Flüssigkeitsreibungskupplung ist es möglich, die Drehzahl der Kühlmittelpumpe stufenlos über den gesamten Drehzahlbereich zu steuern, d. h. an den Kühlbedarf des Motors anzupassen. Dieser Kühlmittelpumpenantrieb hat allerdings den Nachteil, dass bei Ausfall der Flüssigkeitsreibungskupplung, z. B. bei Verlust der Kupplungsflüssigkeit kein Drehmoment mehr übertragen wird, d. h. der Kühlmittelpumpenantrieb ausfällt. In diesem Falle kann die Kühlung des Motors nicht mehr aufrechterhalten werden, was zum Motorschaden führen kann. Diesem Antrieb einer Kühlmittelpumpe, bei welchem die Flüssigkeitsreibungskupplung in Reihe im Antriebsstrang geschaltet ist, fehlt also eine Redundanz im Schadensfall.

Durch die DE-A 197 46 359 wurde eine regelbare Kühlmittelpumpe bekannt, bei welcher eine dauermagnetische Kupplung in den Antriebsstrang zwischen Riementrieb und Kühlmittelpumpe geschaltet ist. Die Drehzahlregelung erfolgt dort stufenlos über die Veränderung des Luftspaltes dieser Magnet- bzw. Wirbelstromkupplung. Auch diesem Antrieb mangelt es an der erforderlichen Redundanz, wenn die Kupplung ausfällt.

Durch die JP 62-210 287 A wurde ein Kühlmittelpumpenantrieb bekannt, bei welchem ein Kühlmittelpumpenrad von einer Keilriemenscheibe über zwei parallel geschaltete Kupplungen, nämlich eine Flüssigkeitsreibungskupplung und eine Elektromagnetkupplung antreibbar ist. Der Antrieb des Kühlmittelpumpenrades über die Flüssigkeitsreibungskupplung erfolgt schlupfbedingt mit reduzierter Drehzahl, während der Antrieb über die Elektromagnetkupplung mit Synchrondrehzahl (Drehzahl der Keilriemenscheibe) erfolgt. Beide Kupplungen sind, in Axialrichtung der Kühlmittelpumpenwelle gesehen, neben der Keilriemenscheibe angeordnet.

Durch die JP 61-119 825 A wurde ein Lüfterantrieb bekannt, bei welchem der Lüfter über eine Flüssigkeitsreibungskupplung von einer Keilriemenscheibe angetrieben wird. Der Lüfter ist am abtreibenden Gehäuse der Flüssigkeitsreibungskupplung befestigt. Zusätzlich ist eine Elektromagnetkupplung vorgesehen, durch welche die Riemenscheibe kraftschlüssig mit dem Gehäuse der Flüssigkeitsreibungskupplung und damit direkt mit dem Lüfter verbunden werden kann. Beide Kupplungen sind, in Axialrichtung der Antriebswelle gesehen, neben der Keilriemenscheibe angeordnet.

Durch die US 3,924,716 A wurde ein temperaturgesteuerter Lüfterantrieb über eine Flüssigkeitsreibungskupplung bekannt, wobei der Lüfter am abtreibenden Gehäuse der Flüssigkeitsreibungskupplung befestigt ist. Innerhalb der Flüssigkeitsreibungskupplung ist zusätzliche eine Fliehkraftkupplung vorgesehen, welche die Antriebsseite und die Abtriebsseite der Flüssigkeitsreibungskupplung bei niedriger Antriebsdrehzahl kraftschlüssig verbindet, sodass der Lüfter mit der Antriebsdrehzahl der Antriebswelle umläuft. Bei höheren Antriebsdrehzahlen der Kupplung öffnet die Fliehkraftkupplung, sodass das Drehmoment durch Flüssigkeitsreibung auf das Gehäuse und damit auf den Lüfter übertragen wird. Die Lüfterdrehzahl ist dann - schlupfbedingt - niedriger als die Antriebsdrehzahl der Kupplung.

Schließlich wurde durch die DE-A 199 40 538 ein weiterer Kühlmittelpumpenantrieb bekannt, bei welchem die Drehmomentübertragung und -regelung in Stufen durch eine magnetisch ansteuerbare Flüssigkeitsreibungskupplung erfolgt. Auch dieser Kühlmittelpumpenantrieb ist mit dem Nachteil fehlender Redundanz behaftet.

Aufgabe der vorliegenden Erfindung ist es, eine Vorrichtung zum Antrieb einer Kühlmittelpumpe der eingangs genannten Art zu schaffen, die einerseits eine hinreichende Regelung der Pumpendrehzahl erlaubt und bei niedrigen Kosten und Herstellungsaufwand eine erhöhte Sicherheit bei Ausfall (Redundanz) gewährleistet. Es ist auch Aufgabe der Erfindung, ein Verfahren zur Steuerung der Drehzahl der Kühlmittelpumpe bereit zu stellen, welches eine an den Kühlungsbedarf des Motors angepasste Steuerung erlaubt.

Die Lösung dieser Aufgabe ergibt sich aus den Merkmalen der Patentansprüche 1 und 8. Durch die Parallelschaltung einer zweiten Kupplung in den Antriebsstrang ergibt sich bei Ausfall der ersten Kupplung die notwendige Redundanz, d. h. die Kühlmittelpumpe wird weiter angetrieben, und die Kühlung des Motors ist gewährleistet. Dies gilt natürlich auch im umgekehrten Falle, wenn die zweite Kupplung ausfällt, dann übernimmt die erste, d. h. die Flüssigkeitsreibungskupplung mit reduzierter Drehzahl den Antrieb der Kühlmittelpumpe. Da die zweite bzw. zusätzliche Kupplung mit der Drehzahl der Riemenscheibe synchron läuft und die Abtriebsdrehzahl der Flüssigkeitsreibungskupplung reduziert gegenüber der Drehzahl der Riemenscheibe ist, ergibt sich insgesamt ein Zwei-Stufen-Antrieb für die Kühlmittelpumpe, d. h. die Pumpe kann in einer ersten Stufe mit einer reduzierten Drehzahl angetrieben werden und in einer zweiten Stufe mit zur Riemenscheibe synchroner Drehzahl. Die reduzierte Drehzahl, d. h. das Untersetzungsverhältnis zur Drehzahl der Riemenscheibe kann durch die Auslegung der Flüssigkeitsreibungskupplung eingestellt werden, z. B. durch Wahl der Viskosität, des Reibspaltes und anderer Parameter, die bekanntermaßen den Schlupf einer solchen Flüssigkeitsreibungskupplung bestimmen. Die zweite bzw. zusätzliche Kupplung ist generell eine Schaltkupplung, die bei entsprechendem Bedarf für die höhere Drehzahl automatisch oder bedarfsweise eingeschaltet wird. Ein solcher Zwei-Stufen-Antrieb ist für die meisten Fälle ausreichend und stellt somit einen kostengünstigen Kompromiss dar.

Nach einer vorteilhaften Weiterbildung der Erfindung ist die Schaltkupplung als elektromagnetische Kupplung ausgebildet, die robust im Betrieb und einfach ansteuerbar ist und sich konstruktiv günstig in bzw. an der Riemenscheibe des Riemenantriebes unterbringen lässt. In vorteilhafter Weiterbildung der Erfindung ist die Elektromagnetkupplung auf der einen Seite der Riemenscheibe, d. h. kühlmittelpumpenseitig und die Flüssigkeitsreibungskupplung auf der anderen Seite angeordnet. Dadurch ergibt sich für den Zusammenbau beider Kupplungen mit der Riemenscheibe eine symmetrische Bauweise sowie ein kurzer Lagerabstand für die fliegende Lagerung der Riemenscheibe auf der Antriebswelle.

Nach einer weiteren vorteilhaften Ausbildung der Erfindung ist die Riemenscheibe in Verbindung mit den beiden Kupplungen als vormontierte Baueinheit ausgebildet, die auf einer Hohlwelle montiert und über diese Hohlwelle einfach mit der Antriebswelle für das Kühlmittelpumpenrad verbunden werden kann. Diese Antriebsbaueinheit kann dann auch für den Antrieb anderer Nebenaggregate, z. B. einer Lenkhilfepumpe oder eines Klimaanlagenkompressors benutzt werden, also auch für solche Anwendungsfälle, wo der Betrieb mit zwei unterschiedlichen Drehzahlstufen vorteilhaft ist.

Durch das erfindungsgemäße Verfahren wird ein Zwei-Stufen-Antrieb vorgeschlagen, bei dem in Abhängigkeit von verschiedenen Parametern jeweils von der einen auf die andere Stufe umgeschaltet werden kann. Einerseits kann die Kühlmittelpumpe - oder auch andere Aggregate - mit reduzierter Drehzahl angetrieben werden, wenn die volle Drehzahl für die Kühlung nicht erforderlich ist oder sogar schädlich wäre, d. h. Kaviationsschäden am Kühlmittelpumpenrad verursachen würde. Andererseits ist ein Antrieb der Kühlmittelpumpe mit erhöhter Drehzahl möglich, wenn dies aufgrund erhöhter Kühlmitteltemperatur, Öltemperatur, Motorbelastung oder anderer Parameter erforderlich ist.

Ausführungsbeispiele der Erfindung sind in der Zeichnung dargestellt und werden im Folgenden näher beschrieben. Es zeigen
- Fig. 1: einen Kühlmittelpumpenantrieb mit durchgehender Antriebswelle und
- Fig. 2: einen abgewandelten Kühlmittelpumpenantrieb mit vormontierter Antriebseinheit.

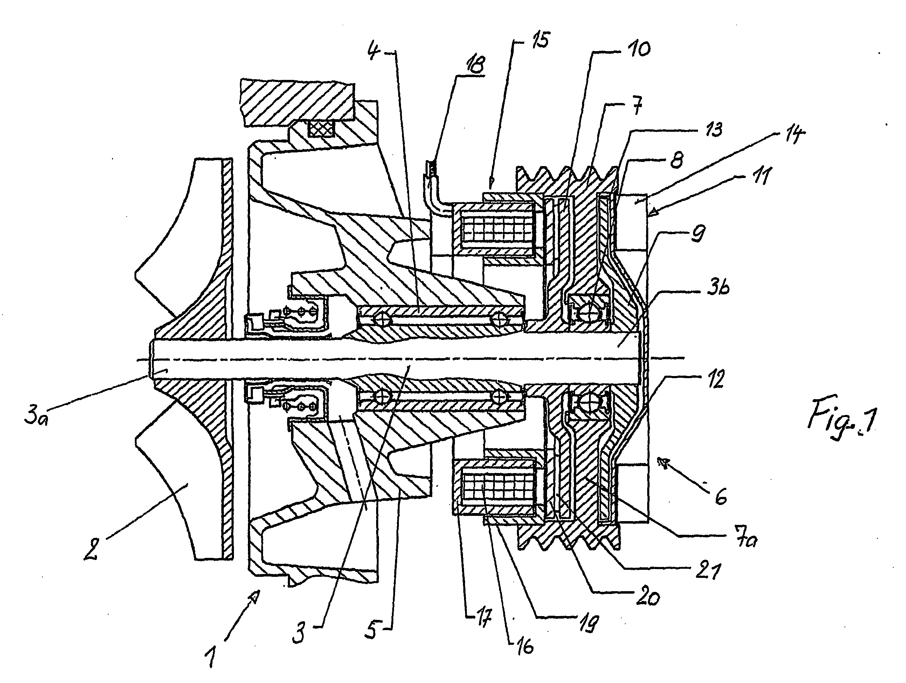

Fig. 1 zeigt einen Antrieb 1 für eine Kühlmittelpumpe für einen nicht dargestellten Kühlmittelkreislauf eines Verbrennungsmotors eines Kraftfahrzeuges. Ein Kühlmittelpumpenrad 2 ist am linken Wellenende 3a einer Antriebswelle 3 befestigt, die ihrerseits über ein Kühlmittelpumpenlager 4 in einem Lagergehäuse 5 drehbar gelagert ist. Auf dem anderen Wellenende 3b der Antriebswelle 3 (auch Kühlmittelpumpenwelle genannt) ist eine Antriebseinheit 6 befestigt, welche dem Antrieb des Kühlmittelpumpenrades 2 dient. Die Antriebseinheit 6 weist eine als Riemenscheibe 7 ausgebildete Antriebsscheibe auf, welche über ein Kugellager 8 drehbar auf dem Wellenende 3b der Antriebswelle 3 gelagert ist. Die Riemenscheibe 7 wird von einem nicht dargestellten Riementrieb vom Verbrennungsmotor des Kraftfahrzeuges angetrieben, d. h. durch eine direkten mechanischen Antrieb mit festem Drehzahlverhältnis. Die Riemenscheibe 7 ist im Querschnitt etwa T-förmig ausgebildet und weist einen Steg 7a auf, auf dessen rechter und linker Seite jeweils eine Mitnehmerscheibe 9, 10 angeordnet ist, die ihrerseits mit dem Wellenende 3b der Antriebswelle 3 fest verbunden sind. Die rechte Mitnehmerscheibe 9 ist Teil einer Flüssigkeitsreibungskupplung 11, welche einerseits aus dem erwähnten Steg 7a der Riemenscheibe 7 sowie aus einem Deckel 12 besteht, der flüssigkeitsdicht in die Riemenscheibe 7 eingesetzt ist, so dass er einen geschlossenen Arbeitsraum 13 begrenzt, der mit einem viskosen Medium (Silikonöl) gefüllt ist. Auf der Außenseite des Deckels 12 sind Kühlrippen 14 zur Wärmeabfuhr der Flüssigkeitsreibungswärme angeordnet. Die auf der linken Seite des Steges 7a angeordnete Mitnehmerscheibe 10 ist Teil einer elektromagnetischen Kupplung 15, welche eine ortsfeste Magnetspule 16 aufweist, die in einem Spulengehäuse 17 aufgenommen ist, welches am Lagergehäuse 5 befestigt ist und eine Stromführung 18 aufweist. Der rotierende Teil der Elektromagnetkupplung 15 besteht aus Magnetflussleitringen 19, die an der Riemenscheibe 7 befestigt sind, und einem Magnetanker 20, der über Blattfedern 21 axial beweglich, jedoch drehfest mit der Mitnehmerscheibe 10 verbunden ist.

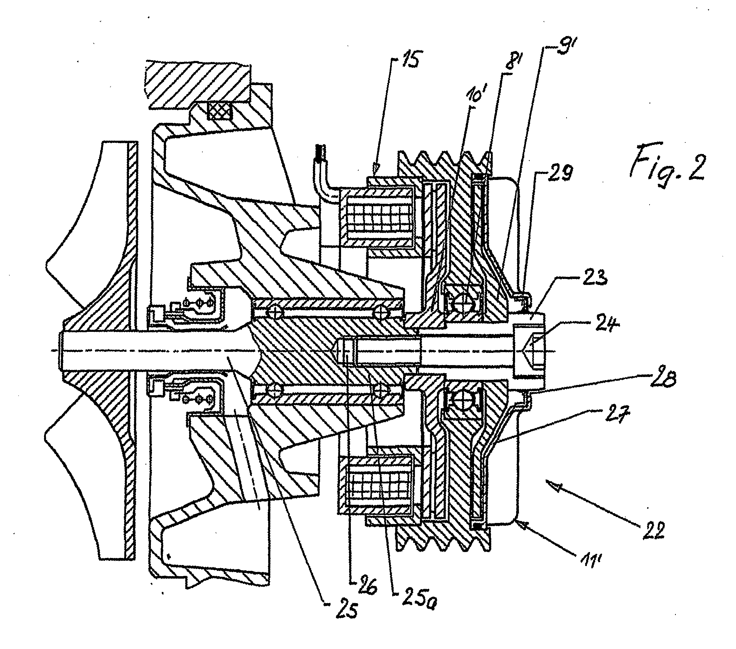

Fig. 2 zeigt ein abgewandeltes Ausführungsbeispiel der Erfindung, wobei für gleiche Teile gleiche Bezugszahlen verwendet werden. Dieses Ausführungsbeispiel des Kühlmittelpumpenantriebes weist eine vormontierte Antriebseinheit 22 auf, die auf einer Hohlwelle 23 montiert und mittels eines zentralen Schraubbolzens 24 mit einer Kühlmittelpumpenwelle 25 fest verbunden ist. Der Schraubbolzen 24 ist in ein Gewindesackloch 26 des Wellenendes 25a der Kühlmittelpumpenwelle 25 eingeschraubt und verspannt somit die Hohlwelle 23 mit den darauf montierten Mitnehmerscheiben 9', 10' sowie dem Lager 8' (Lagerinnenring) gegen die Stirnfläche des Wellenendes 25a. Dabei erfolgt gleichzeitig über die Nabe der Mitnehmerscheibe 10' eine Zentrierung der Hohlwelle 23 gegenüber der Kühlmittelpumpenwelle 25. Um die Montage der Antriebseinheit 22 mittels des zentralen Schraubbolzens 24 und der Hohlwelle 23 zu gewährleisten, weist die Flüssigkeitsreibungskupplung 11' einen Deckel 27 auf, der in seinem zentralen Bereich eine Durchgangsöffnung 28 besitzt, in welcher die Hohlwelle 23 umläuft, die über einen Wellendichtring 29 abgedichtet ist. Die andere Kupplung, d. h. die Elektromagnetkupplung 15 ist bis auf die etwas abgeänderte Mitnehmerscheibe 10' gegenüber dem Ausführungsbeispiel gemäß Fig. 1 unverändert. Dieser Aufbau der Antriebseinheit 22 auf einer Hohlwelle 23 erlaubt eine Vormontage sämtlicher Teile - mit Ausnahme der ortsfesten Magnetspule - so dass diese Antriebseinheit 22 als komplette Baueinheit angeliefert und montiert werden kann. Wie bereits erwähnt, kann diese Baueinheit 22 auch für den Antrieb anderer Nebenaggregate im Kraftfahrzeug, für die eine derartige Stufendrehzahlregelung vorteilhaft ist, verwendet werden.

Die Funktion des Kühlmittelantriebes beider Ausführungsbeispiele gemäß Fig. 1 und Fig. 2 ist dieselbe und wird im Folgenden beschrieben: Wenn die Magnetspule 16 über die Stromzuführung 18 nicht bestromt ist, ist die Elektromagnetkupplung 15 ausgerückt, d. h. es wird kein Drehmoment von der Riemenscheibe 7 auf die Mitnehmerscheibe 10 und damit auch nicht auf die Kühlmittelpumpenwelle 3 übertragen. Dagegen ist die Flüssigkeitsreibungskupplung 11 in Funktion, d. h. über das Silikonöl im Arbeitsraum 13 wird ein Reibmoment von der Riemenscheibe 7 und dem mit ihr verbundenen Deckel 12 auf die Mitnehmerscheibe 9 übertragen, so dass die Kühlmittelpumpenwelle 3 angetrieben wird - allerdings mit reduzierter Drehzahl gegenüber der Drehzahl der Riemenscheibe 7. Die Differenzdrehzahl zwischen der Drehzahl der Mitnehmerscheibe 9 und der Drehzahl der Riemenscheibe 7 resultiert aus dem bekannten Schlupf einer Flüssigkeitsreibungskupplung und ist von verschiedenen Faktoren wie z. B. Viskosität des Silikonöls, Spaltweite oder Belastung abhängig. Der somit beeinflussbare Schlupf ergibt quasi das Untersetzungsverhältnis für die reduzierte Drehzahl. Wenn nun - aufgrund vorgegebener Parameter - eine erhöhte Drehzahl, d. h. die der Stufe 2 erforderlich ist, wird die Elektromagnetkupplung 15 bestromt, so dass die Kupplung 15 einrückt. Das Einrücken bzw. Einkuppeln erfolgt in der Weise, dass der Magnetanker 20 entgegen der Kraft der Blattfedern 21 in Richtung auf die Magnetflussleitringe 19 angezogen wird und dort eine Anpressnormalkraft erzeugt, die die Mitnehmerscheibe 10 über die Blattfedern 21 schlupffrei mitnimmt. Das Kühlmittelpumpenrad 2 läuft somit synchron mit der Riemenscheibe 7. Die Flüssigkeitsreibungskupplung 11 gerät damit "automatisch außer Funktion", d. h. sie wird durch die Magnetkupplung 15 überbrückt. Wird die Magnetkupplung 15 durch Unterbrechung der Bestromung wieder ausgerückt, tritt die Flüssigkeitsreibungskupplung 11 automatisch, d. h. aufgrund des dann auftretenden Schlupfes wieder in Funktion, d. h. das Pumpenrad 2 wird mit reduzierter Drehzahl angetrieben. Die Umschaltung von einer Stufe auf die andere erfolgt über eine hier nicht dargestellte Steuereinheit, in welche bestimmte Parameter des Motors bzw. des Kraftfahrzeuges als Grenzwerte eingegeben sind, z. B. die Kühlmitteltemperatur, die Motoröltemperatur, die Belastung des Motors, d. h. sein Lastmoment, die Motordrehzahl, das Verhältnis von Motorleistung zur Kühlmitteltemperatur und das Verhältnis von Motorleistung zu Motordrehzahl. Übersteigt beispielsweise die Motordrehzahl einen bestimmten Höchstwert, so wird von Stufe 2 auf Stufe 1 umgeschaltet, so dass das Pumpenrad mit reduzierter Drehzahl läuft. Dadurch wird die Kühlmittelpumpe vor Kavitation und Erosion geschütz. Zusätzlich zu den genannten Parametern kann ein Umschalten in folgenden Situationen vorteilhaft sein: bei einem erhöhten Heizbedarf kann auf Stufe 2 geschaltet werden. Bei Motorbremsbetrieb oder Retarderbetrieb kann ebenso auf Stufe 2 geschaltet werden, um eine bessere Wärmeabfuhr über das Kühlmittel zu erreichen. Schließlich kann auch bei einem Kaltstart des Motors eine Umschaltung in Stufe 2 vorteilhaft sein, um den größeren Drehwiderstand der Pumpe in Folge Versulzung des Kühlmittels zu überwinden.

## Patentansprüche

1. Vorrichtung zum Antrieb einer Kühlmittelpumpe (2) für einen Kühlmittelkreislauf eines Verbrennungsmotors für ein Kraftfahrzeug oder anderer Nebenaggregate mit einem eine Antriebsscheibe (7), eine Flüssigkeitsreibungskupplung (11) und eine Antriebswelle (3) aufweisenden Antriebsstrang, **dadurch gekennzeichnet, dass**
a) eine zweite als Elektromagnetkupplung (15) ausgebildete Kupplung parallel zur Flüssigkeitsreibungskupplung (11) in den Antriebsstrang schaltbar ist,
b) die Antriebsscheibe als Riemenscheibe (7) mit einem Steg (7a) ausgebildet ist und
c) die Flüssigkeitsreibungskupplung (11) und die Elektromagnetkupplung (15) jeweils eine von der Riemenscheibe (7) antreibbare Mitnehmerscheibe (9, 10; 9' 10') aufweisen,
d) die beiderseits des Steges (7a) angeordnet und auf der Antriebswelle (3, 3b, 23, 25a) befestigt sind.

2. Vorrichtung nach Anspruch 1, **dadurch gekennzeichnet, dass** die Mitnehmerscheibe (9, 9') der Flüssigkeitsreibungskupplung (11, 11') in einem Arbeitsraum (13) drehbar angeordnet ist, welcher durch die Riemenscheibe (7), deren Steg (7a) sowie einen Deckel (12, 27) gebildet und mit viskoser Flüssigkeit gefüllt ist.

3. Vorrichtung nach Anspruch 1 oder 2, **dadurch gekennzeichnet, dass** die Elektromagnetkupplung (15) eine ortsfeste Magnetspule (16, 17), mit der Riemenscheibe (7) verbundene Magnetflussleitringe (19) sowie einen Magnetanker (20), der über Blattfedern (21) axial beweglich, jedoch drehfest mit der Mitnehmerscheibe (10) verbunden ist, aufweist.

4. Vorrichtung nach einem der Ansprüche 1 bis 3, **dadurch gekennzeichnet, dass** die Antriebswelle (3, 25) in einem Lagergehäuse (5) drehbar gelagert ist, an deren abtriebseitigen Wellenende (3a) ein Kühlmittelpumpenrad (2) und an deren antriebsseitigen Ende (3b; 25a, 23) die Mitnehmerscheiben (9, 10; 9', 10') befestigt sind.

5. Vorrichtung nach Anspruch 4, **dadurch gekennzeichnet, dass** die Elektromagnetkupplung (15) zwischen Riemenscheibe (7) und Kühlmittelpumpenrad (2) angeordnet und die Magnetspule (16, 17) am Lagergehäuse (5) befestigt ist.

6. Vorrichtung nach einem der Ansprüche 1 bis 5, **dadurch gekennzeichnet, dass** die Riemenscheibe (7) zusammen mit der Flüssigkeitsreibungskupplung (11') und dem rotierenden (nicht ortsfesten) Teil der Elektromagnetkupplung (15) als Antriebsbaueinheit (22) ausgebildet ist, die vormontiert und auf die Antriebswelle (25, 25a) aufsteckbar ist.

7. Vorrichtung nach Anspruch 6, **dadurch gekennzeichnet, dass** die Antriebseinheit (22) auf einer Hohlwelle (23) montiert und über die Hohlwelle (23) mittels eines zentralen Schraubbolzens (24) mit der Antriebswelle (25a, 25) verbunden ist.

8. Verfahren zur Steuerung der Drehzahl einer Kühlmittelpumpe für den Kühlmittelkreislauf eines Verbrennungsmotors eines Kraftfahrzeuges, wobei die Kühlmittelpumpe vom Verbrennungsmotor über einen Riementrieb (mechanisch) angetrieben wird, **dadurch gekennzeichnet, dass** die Kühlmittelpumpe (2) in einer ersten Stufe mit reduzierter Drehzahl und in einer zweiten Stufe mit nicht reduzierter Drehzahl angetrieben wird und dass eine Umschaltung von einer Stufe auf die andere in Abhängigkeit von Parametern des Verbrennungsmotors erfolgt.

9. Verfahren nach Anspruch 8, **dadurch gekennzeichnet, dass** die Umschaltung von Stufe 1 auf Stufe 2 bei Überschreiten eines Grenzwertes für folgende Parameter erfolgt:
Kühlmitteltemperatur,
Motoröltemperatur,
Motordrehmoment (Lastmoment),
Verhältnis von Motorleistung zur Kühlmitteltemperatur,
Verhältnis von Motorleistung zur Motordrehzahl.

10. Verfahren nach Anspruch 8 oder 9, **dadurch gekennzeichnet, dass** die Umschaltung von Stufe 2 auf Stufe 1 bei Überschreiten eines Grenzwertes für die Motordrehzahl erfolgt.

## Claims

1. Device for driving a coolant pump (2) for the coolant circuit of an internal combustion engine for a motor vehicle or of other accessories, having a drive train having a drive wheel (7), a fluid friction clutch (11) and a drive shaft (3), **characterized in that**
a) a second clutch which is designed as an electromagnetic clutch (15) can be connected into the drive train parallel to the fluid friction clutch (11),
b) the drive wheel is designed as a pulley (7) with a web (7a), and
c) the fluid friction clutch (11) and the electromagnetic clutch (15) each have a driving disk (9, 10; 9', 10') which can be driven by the pulley (7)
d) and are arranged on both sides of the web (7a) and are fastened on the drive shaft (3, 3b, 23, 25a).

2. Device according to Claim 1, **characterized in that** the driving disk (9, 9') of the fluid friction clutch (11, 11') is arranged rotatably in a working space (13) which is formed by the pulley (7), the web (7a) thereof and a cover (12, 27) and is filled with viscous fluid.

3. Device according to Claim 1 or 2, **characterized in that** the electromagnetic clutch (15) has a positionally fixed magnet coil (16, 17), magnetic-flux-guiding rings (18) connected to the pulley (7) and a magnet armature (20) which is connected in an axially movable, but rotationally fixed manner to the driving disk (10) via leaf springs (21).

4. Device according to one of Claims 1 to 3, **characterized in that** the drive shaft (3, 25) is mounted rotatably in a bearing housing (5) which has a coolant pump impeller (2) fastened to its driven shaft end (3a) and the driving disks (9, 10; 9', 10') fastened to its driving end (3b; 25a, 23).

5. Device according to Claim 4, **characterized in that** the electromagnetic clutch (15) is arranged between pulley (7) and coolant pump impeller (2) and the magnet coil (16, 17) is fastened to the bearing housing (5).

6. Device according to one of Claims 1 to 5, **characterized in that** the pulley (7) together with the fluid friction clutch (11') and the rotating (not positionally fixed) part of the electromagnetic clutch (15) is designed as a drive unit (22) which is preassembled and can be plugged onto the drive shaft (25, 25a).

7. Device according to Claim 6, **characterized in that** the drive unit (22) is mounted on a hollow shaft (23) and is connected to the drive shaft (25a, 25) via the hollow shaft (23) by means of a central screw bolt (24).

8. Method for controlling the speed of rotation of a coolant pump for the coolant circuit of an internal combustion engine of a motor vehicle, the coolant pump being driven (mechanically) by the internal combustion engine via a belt drive, **characterized in that** the coolant pump (2) is driven in a first stage at a reduced speed of rotation and in a second stage at a non-reduced speed of rotation, and **in that** switching over from one stage to the other takes place as a function of parameters of the internal combustion engine.

9. Method according to Claim 8, **characterized in that** the switching over from stage 1 to stage 2 takes place when a limit value for the following parameters is exceeded:
coolant temperature,
engine oil temperature,
engine torque (load moment),
ratio of engine power to coolant temperature,
ratio of engine power to speed of rotation of the engine.

10. Method according to Claim 8 or 9, **characterized in that** the switching over from stage 2 to stage 1 takes place when a limit value for the speed of rotation of the engine is exceeded.

## Revendications

1. Dispositif pour l'entraînement d'une pompe à agent de refroidissement (2) pour un circuit d'agent de refroidissement d'un moteur à combustion interne pour un véhicule automobile ou d'autres groupes secondaires avec une ligne d'entraînement comprenant une poulie d'entraînement (7), un accouplement à frottement de liquide (11) et un arbre d'entraînement (3), **caractérisé en ce que**
a) un deuxième accouplement réalisé en forme d'accouplement électromagnétique (15) peut être commuté dans la ligne d'entraînement parallèlement à l'accouplement à frottement de liquide (11);
b) la poulie d'entraînement est réalisée en forme de poulie à courroie (7) avec une âme (7a); et
c) l'accouplement à frottement de liquide (11) et l'accouplement électromagnétique (15) présentent chacun un disque d'entraînement (9, 10; 9', 10') pouvant être entraîné par la poulie à courroie (7);
d) qui sont disposés de part et d'autre de l'âme (7a) et qui sont fixés sur l'arbre d'entraînement (3, 3b, 23, 25a).

2. Dispositif selon la revendication 1, **caractérisé en ce que** le disque d'entraînement (9, 9') de l'accouplement à frottement de liquide (11, 11') est disposé de façon rotative dans une chambre de travail (13), qui est formée par la poulie à courroie (7), son âme (7a) ainsi que par un couvercle (12, 27) et qui est remplie d'un liquide visqueux.

3. Dispositif selon la revendication 1 ou 2, **caractérisé en ce que** l'accouplement électromagnétique (15) comprend une bobine magnétique stationnaire (16, 17), des bagues conductrices du flux magnétique (19) assemblées à la poulie à courroie (7) ainsi qu'un induit magnétique (20), qui est relié au disque d'entraînement (10), de façon mobile axialement mais fixe en rotation, au moyen de ressorts à lames (21).

4. Dispositif selon l'une quelconque des revendications 1 à 3, **caractérisé en ce que** l'arbre d'entraînement (3, 25) est monté de façon rotative dans un logement de palier (5), dont l'extrémité d'arbre (3a) côté sortie porte une roue de pompe à agent de refroidissement (2) et dont l'extrémité (3b; 25a, 23) côté entraînement porte les disques d'entraînement (9, 10; 9', 10').

5. Dispositif selon la revendication 4, **caractérisé en ce que** l'accouplement électromagnétique (15) est disposé entre la poulie à courroie (7) et la roue de pompe à agent de refroidissement (2) et la bobine magnétique (16, 17) est fixée au logement de palier (5).

6. Dispositif selon l'une quelconque des revendications 1 à 5, **caractérisé en ce que** la poulie à courroie (7) est réalisée sous la forme d'une unité modulaire d'entraînement (22) avec l'accouplement à frottement de liquide (11') et la partie tournante (non stationnaire) de l'accouplement électromagnétique (15), qui est préassemblée et qui peut être engagée sur l'arbre d'entraînement (25, 25a).

7. Dispositif selon la revendication 6, **caractérisé en ce que** l'unité d'entraînement (22) est montée sur un arbre creux (23) et est reliée à l'arbre d'entraînement (25a, 25) par l'arbre creux (23) au moyen d'un boulon fileté central (24).

8. Procédé de commande de la vitesse de rotation d'une pompe à agent de refroidissement pour le circuit d'agent de refroidissement d'un moteur à combustion interne d'un véhicule automobile, dans lequel la pompe à agent de refroidissement est entraînée par le moteur à combustion interne par l'intermédiaire d'un entraînement (mécanique) à courroie, **caractérisé en ce que** l'on entraîne la pompe à agent de refroidissement (2) dans une première étape avec une vitesse de rotation réduite et dans une deuxième étape avec une vitesse de rotation non réduite, et **en ce que** l'on opère une inversion d'une étape à l'autre en fonction de paramètres du moteur à combustion interne.

9. Procédé selon la revendication 8**, caractérisé en ce que** l'on opère l'inversion de l'étape 1 à l'étape 2 lors du dépassement d'une valeur limite pour les paramètres suivants:
température de l'agent de refroidissement,
température de l'huile du moteur,
régime du moteur (couple de charge),
rapport de la puissance du moteur à la température de l'agent de refroidissement,
rapport de la puissance du moteur au régime du moteur.

10. Procédé selon la revendication 8 ou 9, **caractérisé en ce que** l'on opère l'inversion de l'étape 2 à l'étape 1 lors du dépassement d'une valeur limite pour le régime du moteur.
